# EUROPEAN PATENT SPECIFICATION

(11) **EP 4 490 761 B1**
(45) Date of publication and mention of the grant of the patent: **22.04.2026**
(21) Application number: 23714310.2
(22) Date of filing: 07.03.2023
(51) Int. Cl.: G21F 5/06, B65G 1/04

(54) **STORAGE FOR CONTAINERS FOR A SOLID TARGET MATERIAL FOR A RADIOISOTOPE PRODUCTION SYSTEM**
LAGERUNG FÜR BEHÄLTER FÜR EIN FESTES ZIELMATERIAL FÜR EIN RADIOISOTOPENHERSTELLUNGSSYSTEM
STOCKAGE POUR RÉCIPIENTS DE MATÉRIAU CIBLE SOLIDE DESTINÉS À UN SYSTÈME DE PRODUCTION DE RADIO-ISOTOPES

(30) Priority: 09.03.2022 IT 202200004469
(43) Date of publication of application: 15.01.2025
(73) Proprietor: Comecer S.p.A., 48014 Castel Bolognese (IT)
(72) Inventor: BRUNETTI, Alessandro, 48014 Castel Bolognese (RA) (IT); TESTA, Marco, 48014 Castel Bolognese (RA) (IT)
(74) Representative: Studio Torta S.p.A.
(86) International application number: PCT/IB2023/052152
(87) International publication number: WO 2023/170579

(56) References cited:
- DE-A1- 1 464 240
- FR-A1- 2 694 122

## Description

### CROSS-REFERENCE TO RELATED APPLICATIONS

This Patent Application claims priority from Italian Patent Application No. 102022000004469 filed on March 9, 2022.

### TECHNICAL FIELD

The present invention relates to a storage for containers for a solid target material for a radioisotope production system, a unit for handling a container for a solid target material and dissolving the solid target material comprising said storage, and a radioisotope production system comprising said unit.

In particular, the present invention finds advantageous, but not exclusive, application in radioisotope production systems which use a medium- or high-energy cyclotron, i.e., a cyclotron with an energy equal to or greater than 18 MeV, to produce a radioisotope starting from a solid precursor material, also known as a solid target material, in the form of a thin layer electrodeposited on a suitable metal support, to which the following description will make explicit reference without thereby losing generality.

### BACKGROUND

To date, various types of pharmaceutical-grade radioisotopes (radiopharmaceuticals) are obtained following proton beam irradiation (proton bombardment) of a solid target material typically metallic in origin.

The process of producing a radioisotope from a solid target material basically involves the following steps: electrodepositing ("electroplating") the solid target material on a metal support; proton beam irradiating the solid target material on the support; dissolving the irradiated solid target material to obtain a solution containing the radioisotope produced by said proton irradiation; and purifying the above solution to separate the radioisotope from the unreacted target material and impurities. The above steps are carried out in respective processing stations and therefore the support comprising the solid target material must be arranged in a container for transport between several processing stations, for example from the irradiation station to the dissolution station.

A radioisotope production system is known, said radioisotope production system comprising at least one container for the solid target material, an irradiation station comprising a cyclotron for emitting a proton beam against the solid target material in the container, a handling unit for handling the container and chemically dissolving the solid target material in the container, a purification module for feeding an acidic solution to the above handling unit for dissolving the solid target material and extracting the radioisotope from the solution produced by dissolution, and a pneumatic system for bidirectionally transferring the container between the irradiation station and the handling unit.

The handling unit comprises a shielded isolator, also commonly referred to as a cell, which houses therein: a worktop having a transfer port for the container; a parking support for the container arranged above the worktop; a dissolution station, which comprises at least one centring support for the container arranged on the worktop and a related movable dissolution head to be arranged on the container when the latter is on the centring support; and a movable gripping head for gripping the container and moving it between the transfer port, the parking support, and the dissolution station.

The pneumatic system comprises a flexible conduit, which connects the transfer port on the worktop in the shielded isolator to the irradiation station, a first vacuum generator, which is connected to the gripping head for transferring the container from the irradiation station to the transfer port, and a second vacuum generator, which is connected to the irradiation station for transferring the container from the transfer port to the irradiation station.

In use, a container containing the solid target material is manually placed by an operator on the parking support. The gripping device grips the container and moves it into the transfer port. Through the action of the second vacuum generator, the container is transferred to the irradiation station, where the solid target material inside the container is irradiated with the proton beam for the production of the radioisotope. Radiation also changes the material of the container by making it radioactive.

At the end of the irradiation step, the container and the material contained therein emit a high level of radiation hazardous to the human body and therefore the operator cannot manually handle the container. Therefore, the container is transferred, automatically, to the transfer port in the shielded isolator and gripped by the gripping head when it comes out of the transfer port through the action of the first vacuum generator and then placed on a centring support of the dissolution station through a sequence of movements of the gripping head. In the dissolution station, the solid target material is dissolved, resulting in a solution comprising the radioisotope, and this solution is transferred to the purification module.

Once the solid target material has dissolved, the gripping device moves the container to the parking position, where it must remain for a preset decay time in order to reduce the emitted radiation to levels that can be tolerated by an operator. In fact, at the end of the dissolution step, the container is substantially empty but is still "hot" from the radioactivity point of view. The decay time depends on the radioisotope produced and can be up to eight days.

At the end of the decay time, the operator can open the shielded isolator to extract the container and introduce another one with the solid target material on which to perform the cycle described above to produce a further radioisotope.

It follows from the above that the known radioisotope production system has a reduced productivity because at the end of the dissolution step for each container a decay time must be allowed before a subsequent container can be processed.

French patent application published with no. FR2694122A1 discloses an apparatus for transporting irradiated elements. The apparatus comprises an upright cylindrical closed vessel, enclosing a turntable which carries circumferentially spaced, open-ended tubes, removable plugs in the lid of the vessel to enable elements to be dropped into the respective tubes and a single discharge opening in the vessel floor, through which the elements may be discharged from the tubes by rotating the turntable to align successive tubes with opening.

### SUMMARY

The object of the present invention is to provide a unit for handling a container for a solid target material and for dissolving the solid target material in the container, which unit is free from the drawbacks described above and, at the same time, easy and inexpensive to manufacture.

In accordance with the present invention, a storage for containers for a solid target material for a radioisotope production system, a unit for handling a container for a solid target material and dissolving the solid target material in the container, and a radioisotope production system are provided as defined in the appended claims.

### BRIEF DESCRIPTION OF THE FIGURES

The present invention will now be described with reference to the accompanying drawings, which illustrate a non-limiting embodiment thereof, wherein:
- Figure 1 shows an axonometric and partially schematic view of a radioisotope production system manufactured according to the present invention;
- Figure 2 shows an exploded axonometric view of a container for a solid target material used in the system in Figure 1;
- Figure 3 shows an axonometric view of a storage for containers for solid target material of the system in Figure 1;

- Figure 4 shows a cross-sectional view, along a vertical plane, of the storage in Figure 3;
- Figure 5 shows an exploded axonometric view, along a vertical axis, of a part of the storage in Figure 3;
- Figure 6 shows a top view of an inner part of the storage in Figure 3; and
- Figure 7 shows an inner component of the storage part shown in Figure 5.

### DESCRIPTION OF EMBODIMENTS

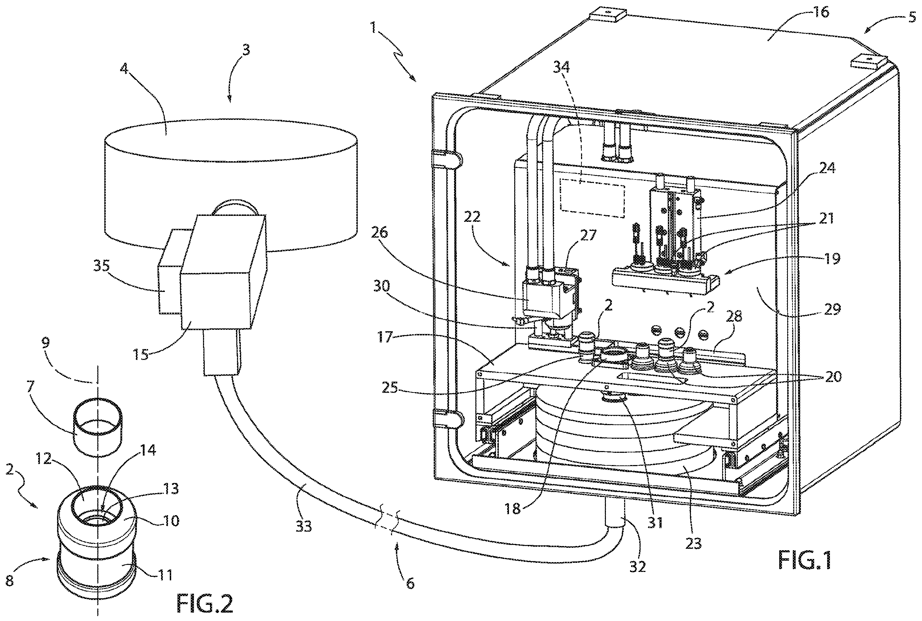

In Figure 1, reference numeral 1 generally designates, as a whole, a radioisotope production system. The radioisotope production system 1 comprises at least one container 2 for a solid target material, i.e., the precursor material from which the radioisotope is obtained, an irradiation station 3, which comprises a cyclotron 4 for emitting a proton beam against the solid target material in the container 2 in order to obtain the radioisotope, and a handling unit 5 for handling the container 2 and dissolving the solid target material present in the container 2 after the solid target material has been irradiated.

The radioisotope production system 1 further comprises a pneumatic transfer system 6 for bidirectionally transferring a container 2 between the irradiation station 3 and the handling unit 5, as will be better described below.

With reference to Figure 2, the container 2 comprises a well 7 for containing the solid target material, and a support body 8 for housing the well 7. In particular, the support body 8 has a cylindrical symmetry with respect to a longitudinal axis 9 and comprises an upper portion 10 and a lower portion 11 coaxial with each other with respect to the longitudinal axis 9. The upper portion 10 has a seat 12 for housing the well 7 with lateral interference. The lower section 11 comprises an inner cavity 13 which communicates with the seat 12 through an opening 14 centred on the longitudinal axis 9. Preferably, the well 7 is made of platinum and the support body 8 is made of aluminium.

With reference to Figures 1 and 2, the irradiation station 3 comprises a support and connection assembly 15, of a known type and therefore illustrated schematically in the figure, for supporting the container 2 with the well 7 facing the cyclotron 4 and connecting the cavity 13 of the container 2 to a fluid cooling system, also known and not shown, for the purpose of circulating a cooling fluid in the cavity 13 for cooling the well 7 during radiation with the proton beam.

With reference to Figure 1, the handling unit 5 comprises a shielded isolator 16 and, within the latter, a worktop 17 presenting a transfer port 18 for the container 2, a dissolution station 19, which comprises at least one centring support 20 for the container 2 arranged on the worktop 17 and at least one respective dissolution head 21 suitable for feeding a dissolving solution, and particularly a substantially acidic solution, into the container 2 to dissolve the solid target material when the container 2 is placed on the centring support 20, a handling device 22 for moving the container 2 from the dissolution station 21 to the transfer port 18, and a storage 23 for containers, for example of a type similar to the container 2, arranged below the worktop 17 and communicating with the transfer port 18.

The dissolution head 21 is mounted on a movable slide 24 in a direction perpendicular to the worktop 17 so that it can be arranged on the container 2 and coupled to the well 7 when the container 2 is on the centring support 20.

The centring support 20 is shaped to be coupled to the cavity 13 of the container 2. The centring support 20 can be electrically heated to facilitate the dissolution of certain types of solid target material.

The dissolution head 21 is also suitable for collecting the solution produced by the dissolution of the solid target material. The dissolving solution is fed to the container 2 and the solution produced is collected from the container 2 when the dissolution head 21 is placed on the centring support 20.

In particular, the dissolution head 21 is connected via conduits (not shown) to a purifier module, which is known per se and therefore not shown. The purifier module supplies the dissolving solution to the dissolution head 21 and receives from the latter the solution produced by the dissolution of the solid target material in order to purify it and isolate the radioisotope according to known techniques.

In the embodiment shown in Figure 1, the dissolution station 19 comprises a plurality of centring supports 20, in particular three centring supports 20, and the same number of dissolution heads 21. A container 2 is shown on one of the centring supports 20. The dissolution heads 21 are movable in a mutually integral manner. The dissolution heads 21 are pre-configured to dissolve different solid target materials. In other words, the dissolution station 19 can operate on one container 2 at a time. For this purpose, the dissolution heads 21 are connected via conduits to respective sections of the purification module.

The handling unit 5 comprises a parking support 25 for the container 2 arranged on the worktop 17. The parking support 25 has the same shape as the centring support 20. Figure 1 shows another container 2 on the parking support 25. The handling device 22 is designed to move the container 2 between the parking support 25, the transfer port 18 and the dissolution station 21.

In particular, the handling device 22 comprises a gripping head 26, which is movable in a first direction parallel to the worktop 17 and in a second direction perpendicular to the worktop 17. In greater detail, the handling device 22 comprises a slide 27, which is movable along a guide 28 parallel to the worktop 17, and in particular extends along an inner wall 29 of the shielded isolator 16 perpendicular to the worktop 17, and the gripping head 26 is slidably mounted on at least one guide 30 integral with the slide 27 and perpendicular to the worktop 17. The transfer port 18, the parking support 25, and the centring supports 20 are aligned on the worktop 17 along a line parallel to the guide 27. The transfer port 18 is arranged between the parking support 25 and a centring support 20.

The storage 23 comprises an upper conduit 31 for connection with the transfer port 18. The upper conduit 31 is necessarily arranged in the shielded isolator 16. The storage 23 comprises a lower conduit 32 protruding out of the shielded isolator 16 for connection with the pneumatic transfer system 6. In particular, the pneumatic transfer system 6 comprises a flexible conduit 33 connecting the lower conduit 32 to the irradiation station 3, and in particular to the support and connection assembly 15.

The pneumatic transfer system 6 further comprises a first vacuum generator 34, which is connected to the gripping head 26 for transferring the container 2 from the irradiation station 3 to the transfer port 18, and a second vacuum generator 35, which is connected to the support and connection assembly 15 for transferring the container 2 from the transfer port 18 to the irradiation station 3. In the embodiment in Figure 1, the vacuum generator 34 is arranged in the shielded isolator 16.

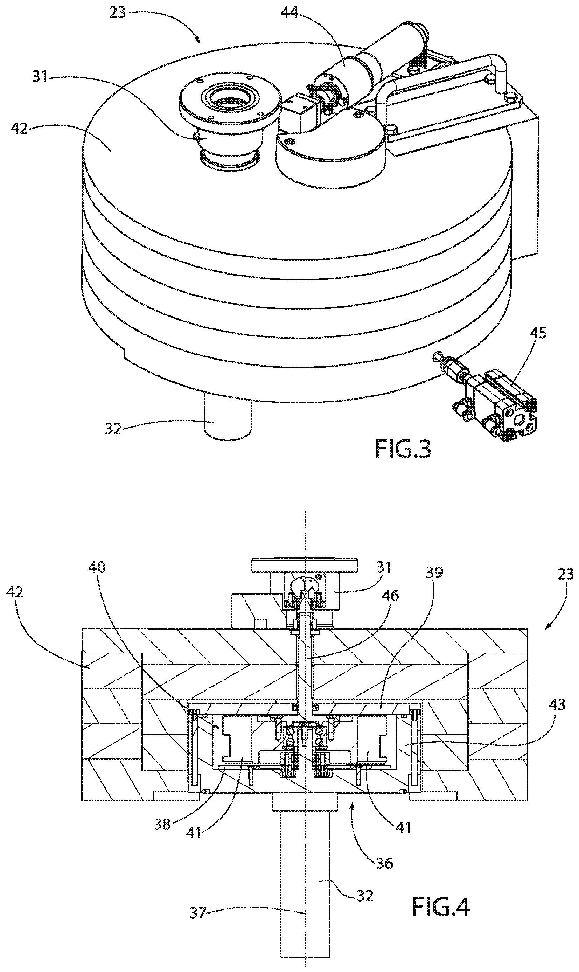

Figure 3 shows a top axonometric view of the storage 23, and Figure 4 shows a cross-sectional view, along a vertical plane, of the storage 23.

With particular reference to Figure 4, the storage 23 comprises a cup-shaped body 36, which has a cylindrical symmetry with respect to an axis 37 and has, on its bottom, a support portion 38 for the containers 2, a lid 39, which closes the cup-shaped body 36, and a drum or revolving turret 40, which is coaxially housed in the cup-shaped body 36, comprises a plurality of seats 41 to hold respective containers standing on the support portion 38 and is designed to rotate around the axis 37. The axis 37 lies in the plane of the sectional view in Figure 4.

Preferably, the cup-shaped body 36, the lid 39, and the drum 40 are made of anodized aluminium.

With reference to both Figures 3 and 4, the storage 23 comprises a shielding coating 42, which externally envelops a side wall 43 of the cup-shaped body 36 and the lid 39 and is made of a first material suitable for shielding the ionizing radiation generated by the container 2 after it has been irradiated by the proton beam.

Preferably, said first material is a lead alloy, for example 98% lead and 2% antimony. In particular, the shielding coating 42 has two concentric layers and each layer comprises a plurality of superimposed rings and an upper cover disc made of said first material. The shielding coating 42 has a radial thickness of 75 mm and an upper thickness of 50 mm.

Figure 3 shows, in addition to the upper conduit 31 and the lower conduit 32, two actuator devices 44 and 45, which are arranged on the outside of the shielding coating 42. The actuator device 44 is kinematically connected to the drum 40 via a drive shaft 46 centred on the axis 37 to cause the drum 40 to rotate. The drive shaft 46 passes through the lid 39 and the shielding coating 42. The actuator device 44 consists, for example, of an electric motor. The actuator device 45 causes the movement of an inner component of the storage 23, which will be described below.

The upper conduit 31 is connected to the lid 39 and passes through two discs of the shielding coating 42 above the lid 39.

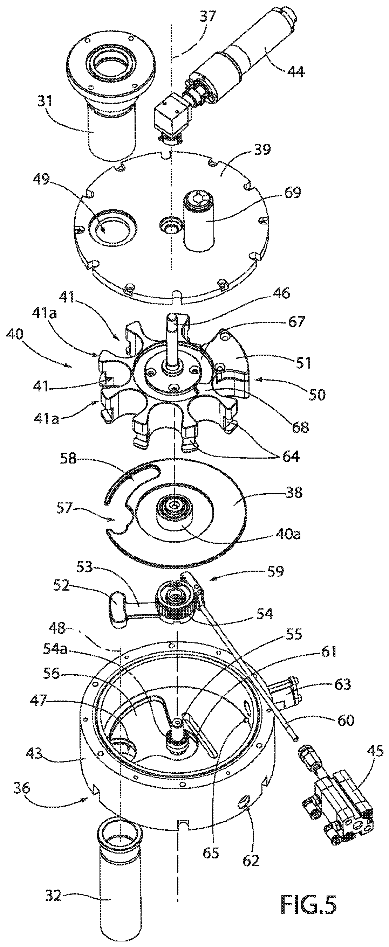

With reference to Figure 5, the cup-shaped body 36 comprises, on its bottom, an opening 47 centred on an axis 48 parallel to the axis 37 for the passage of a container 2, and the lid 39 comprises an opening 49 coaxial with the opening 47 for the passage of a container 2. The upper conduit 31 is connected to the opening 47 via a sealing element (not shown), such as an O-ring, and the lower conduit 32 is connected to the opening 49, also via a sealing element (not shown).

The drum 40 has its seats 41 evenly distributed around the axis 37 according to a certain angular pitch. In the example in Figure 5, there are 8 seats 41.

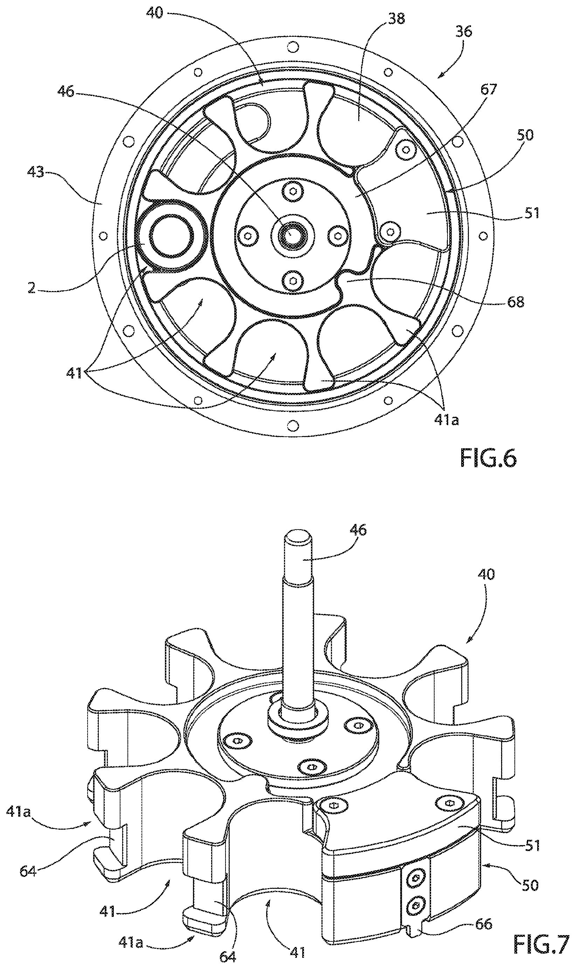

With reference also to Figure 6, which shows a top view of the drum 40 inside the cup-shaped body 36 and of a container 2 in a seat 41, each seat 41 has a section, along a plane transverse to the axis 37, in the shape of a C open outwardly of the drum 40 such that, in use, a container 2 held by the seat 41 has a side portion facing the inner surface of the side wall 43 of the cup-shaped body 36. In other words, each pair of adjacent seats 41 is divided by a radial element 41a having two concave opposite faces.

The drum 40 comprises a shielding sector 50, which comprises a plate 51 attached to the remaining body of the drum 40, said plate 51 having an extension, along a plane transverse to the axis 37, sufficient to occlude the opening 49 and made of a second material suitable for shielding the ionizing radiation generated by the container 2 after it has been irradiated by the proton beam. In other words, the drum 40 is divided into a plurality of circular sectors, in particular nine circular sectors, of equal width, one of which is the shielding sector 50, each of the remainder comprising a respective seat 41. In Figure 5, the shielding sector 50 is illustrated far away from the opening 49. Preferably, the second material is tungsten.

The storage 23 comprises a shelf 52 which is arranged in the cup-shaped body 36 and is movable parallel to the support portion 38, between a first position, in which the shelf 52 obstructs the opening 47 so as not to allow the passage of the container 2, and a second position, in which the opening 47 is free. Figure 5 shows the shelf 52 in the first position.

The shelf 52 is provided with an arm 53 having an end 54 adapted to rotate around the axis 37, and in particular coupled via a bearing 54a to a pin 55 protruding from the bottom of the cup-shaped body 36 along the axis 37, such that the shelf 52 moves along a trajectory in the shape of a circular segment. For this purpose, the bottom of the cup-shaped body 36 comprises a seat 56 in the shape of a substantially circular sector to accommodate the shelf 52 and the arm 53 during their movement.

Preferably, the shelf 52 and the arm 53 are made of anodized aluminium.

The support portion 38 is a plate attached to the bottom of the cup-shaped body 36. In particular, the support portion 38 has an annular shape, which has a cut-out 57 shaped like the opening 46. The shelf 52 is movable along a slot 58 of the support portion 38 and has an upper face substantially coplanar with an upper face of the support portion 38. Necessarily, the slot 58 has a shape that follows the circular-segment trajectory of the shelf 52.

The actuator device 45 is a linear actuator, for example a pneumatic actuator, and is kinematically connected to the end 54 of the arm 53 via a rack-and-pinion coupling 59, the pinion of which is integral with the end 54 and the rack of which is integral with a rod 60, which is coupled to the actuator device 45. The rack-and-pinion coupling 59 is arranged inside the cup-shaped body 36, and a portion of the rod 60 slides in a groove 61 obtained on the bottom of the cup-shaped body 36. The rod 60 comes out of the cup-shaped body 36 via a through hole 62 which is aligned with the groove 61. The pinion of the rack-and-pinion coupling 59 protrudes centrally from the circular opening defined by the annular shape of the support plate 38.

The drum 40 is coupled to the pin 55 via an additional bearing 40a so as to rotate around the axis 37. This bearing 40a is arranged above the pinion of the rack-and-pinion coupling 59.

The storage 23 further comprises a proximity sensor 63, for example an inductive sensor, mounted on the side wall 43 of the cup-shaped body 36 so that it faces the inside of the cup-shaped body 36 to detect the presence or absence of a container 2 in a respective seat 41 when the latter passes in front of the mounting position of the proximity sensor 43. For this purpose, all the radial elements 41a of the drum have a groove 64 at the level of the proximity sensor 63 so that the latter reads "empty" at a radial element 41a.

With reference to Figures 5 and 7, the cup-shaped body 36 comprises a pin 65 (Figure 5) protruding therein, and the drum 40 comprises a stop element 66 (Figure 7) suitable for engaging with the pin 65 so as to define an angular reference position for the drum 40.

In use, when the drum 40 reaches the reference position, the actuator device 44 stops and draws a spike in electric current. Therefore, by measuring the current draw of the actuator device 44 it is possible to detect when the drum 40 stops at the reference position. However, the drum 40 could also stop due to an unintended mechanical blockage.

In order to discriminate between an unintended mechanical blockage and the stop at the reference position, the drum 40 comprises an annular surface portion 67 facing the lid 39 and having a discontinuity element 68 in the shape of a small tooth, and the storage 23 comprises another proximity sensor 69, for example an inductive sensor, mounted in the lid 39 in a position to detect the discontinuity element 68 when the drum 40 is in the reference position.

Therefore, the drum 40 is adapted to rotate around the axis 37 to position each seat 41 between a transfer position and a plurality of storage positions. In the transfer position, the seat 41 is aligned with the opening 49 of the lid 39, and thus with the transfer port 18 (Figure 1), to receive a container 2 from the worktop 17 (Figure 1) when the shelf 52 is in its first position or to allow direct passage of a container 2 between the opening 49 and the opening 47, and thus allow direct transfer of a container 2 between the handling unit 5 and the irradiation unit 3, when the shelf 52 is in its second position. At each of the transfer positions, the seat 41 does not face the opening 49, in order to keep a container 2 inside the storage 23. In the example shown, there are eight storage positions.

The radioisotope production system 1 further comprises an electronic control unit (not shown), which is configured to synchronize the handling device 22 with the vacuum generators 34 and 35 and actuator devices 44 and 45 to allow a container 2 to be transferred between the irradiation station and the handling unit 5 and, within the latter, to allow the container 2 to be transferred between the transfer port 18, the parking support 25 and the dissolution station 19, and between the transfer port 18 and the storage 23, where the container 2 is left for a preset decay time.

In particular, in use, after the dissolution of the solid target material in a container 2, the control unit operates the handling device 22 and the vacuum generator 34 to bring the container 2 above the transfer port 18, operates the actuator device 45 to bring the shelf 52 into the first position to obstruct the opening 49, and deactivates the vacuum generator 34 so that the gripping head 26 drops the container 2 into the transfer port 18. The container 2 falls along the upper conduit 31 until it rests on the shelf 52 to thus be received by a seat 41 in the transfer position.

At this point, the control unit operates the actuator device 44 to rotate the drum 40 to bring the seat 41 with the container 2 into a storage position and an adjacent seat 41 into the transfer position. The control unit uses the signals supplied by the proximity sensors 63 and 69 and by an encoder (not shown) built into the actuator device 44 to count and locate the containers 2 inside the storage 23 during the rotation of the drum 40.

When the storage 23 is at rest, that is, when no container 2 is to be transferred or stored, the drum 40 is rotated until the shielding sector 50 occludes the opening 49.

Although the invention described above makes particular reference to a very precise embodiment, it is not to be construed as limited to this embodiment, since all the variations, modifications or simplifications covered by the attached claims fall within its scope, such as for example:
- the container 2 contains solid target material in other forms, for example in the form of a foil or a compressed powder capsule placed on the metal support of the container,
- the container 2 comprises a lid which screws onto the support body 8 in order to close the well 7 hermetically.

The main advantage of the storage 23 described above is that it can be integrated into a handling unit 1 of a known type to store a number of containers 2 inside the shielded isolator 16 of the handling unit 1 to let the radioactivity in the containers 2 decay before they are removed from the shielded isolator 16, without having to interrupt the process of dissolving the solid target material in subsequent containers 2. In addition, the openings 47 and 49 coaxial with each other and with the movable shelf 52 allow the storage 23 to be put in a "pass-through" configuration when transferring a container 2 between the handling unit 5 and the irradiation unit.

## Claims

1. A storage for containers for a solid target material for a radioisotope production system, the storage (23) comprising: a cup shaped body (36), which has a cylindrical symmetry with respect to a first axis (37) and comprises, on its bottom, a first opening (47) centred on a second axis (48) parallel to the first axis (37) for the passage of a container (2) and a support portion (38) for containers; a shelf (52), which is movable parallel to the support portion (38), between a first position, in which the shelf (52) obstructs the first opening (47) so as not to allow the passage of the container (2), and a second position, in which the first opening (47) is free; and a lid (39), which closes the cup-shaped body (36) and comprises a second opening (49) for the passage of the container (2); the storage being **characterized in that** the second opening (49) is coaxial to the first opening (47) and **in that** it further comprises a drum (40), which is coaxially housed in the cup-shaped body (36), comprises a plurality of seats (41) distributed around the first axis (37) according to a certain angular pitch to hold respective containers standing on the support portion (38) and is adapted to rotate around the first axis (37) to position each seat (41) between a transfer position, in which the seat (41) is aligned with the second opening (49) to receive the container (2) when the shelf (52) is in the first position or to allow direct passage of the container (2) between the first opening (47) and the second opening (49) when the shelf (52) is in the second position, and a plurality of storage positions, in each of which the seat (41) is not facing the second opening (49).

2. The storage according to claim 1, and comprising a shielding coating (42), which externally envelops at least one side wall (43) of the cup-shaped body (36) and the lid (39) and is made of a first material, preferably lead alloy, suitable for shielding radiation; the drum (40) comprising a shielding sector (50), which comprises an element (51) having an extension, along a plane transverse to the first axis (37), sufficient to occlude the second opening (49) and is made of a second material, preferably tungsten, suitable for shielding said radiation.

3. The storage according to claim 1 or 2, and comprising a shielding coating (42), which externally envelops at least one side wall (43) of the cup-shaped body (36) and the lid (39) and is made of a first material, preferably lead alloy, suitable for shielding radiation, and a first actuator device (44), which is arranged outside the shielding coating (42) and is kinematically coupled to the drum (40) via a drive shaft (46) which is centred on the first axis (37) and passes through the lid (39) and the shielding coating (42) to cause the drum (40) to rotate.

4. The storage according to any one of claims 1 to 3, wherein said support portion (38) is a plate having an annular shape, said plate having a cut-out shaped like the first opening (47).

5. The storage according to any one of claims 1 to 4, wherein said support portion (38) is a plate and said shelf (52) is movable along a slot (58) of said support portion (38) and has an upper face substantially coplanar to an upper face of said support portion (38).

6. The storage according to any one of claims 1 to 5, wherein said shelf (52) is provided with an arm (53) having an end (54) adapted to rotate about said first axis (37) such that said shelf (52) moves along a trajectory in the shape of a circular segment; the storage (23) comprising a second actuator device (45) for rotating said end (54) about said first axis (37).

7. The storage according to any one of claims 1 to 6, wherein each seat (41) has a section, along a plane transverse to the first axis (37), in the shape of a C open outwardly of the drum (40) such that, in use, the container (2) held by the seat (41) has a side portion facing the inner surface of a side wall (43) of the cup-shaped body (36); the storage (23) comprising a first proximity sensor (63), which is mounted on said side wall (43) to detect the presence or absence of the container (2) in a respective seat (41) when the latter passes in front of the mounting position of the proximity sensor (63).

8. The storage according to any one of claims 1 to 6, wherein said cup-shaped body (36) comprises a pin (65) protruding therein, and said drum (40) comprises a stop element (66) suitable for engaging with said pin (65) so as to define an angular reference position for said drum (40); the drum (40) comprising a surface portion (67) facing the lid (39) and having a discontinuity element (68), and the storage (23) comprising a second proximity sensor (69) mounted in the lid (39) in a position to detect the discontinuity element (68) when the drum (40) is in the reference position.

9. A unit for handling a container (2) for a solid target material and for dissolving the solid target material present in the container (2), the unit (5) comprising a shielded isolator (16) and, within the latter, a worktop (17) presenting a transfer port (18) for the container (2), a dissolution station (19), which comprises at least one support (20) for the container (2) arranged on the worktop (17) and a dissolution head (21) suitable for feeding a dissolving solution into the container (2) to dissolve the solid target material when the container (2) is placed on the support (20), a handling device (22) for moving the container (2) from the dissolution station (19) to the transfer port (18), and a storage (23) for containers according to any one of claims 1 to 8; the storage (23) being arranged below the worktop (17) and further comprising a first transfer conduit (31) for putting said second opening (49) into communication with the transfer port (18).

10. A system for producing a radioisotope comprising at least one container (2) for a solid target material, an irradiation station (3) comprising a cyclotron (4) for emitting a proton beam against the solid target material in the container (2), a unit (5) for handling the container (2) and dissolving the solid target material present in the container (2), and a pneumatic transfer system (6) for bidirectionally transferring the container (2) between the irradiation station (3) and said unit (5); said unit (5) being according to claim 9 and the pneumatic transfer system (6) comprising at least a second transfer conduit (32, 33) for connecting said first opening (47) of said storage (23) with the irradiation station (3).

## Patentansprüche

1. Lager für Behälter für ein festes Zielmaterial für ein Radioisotopen-Produktionssystem, wobei das Lager (23) Folgendes umfasst: einen becherförmigen Körper (36), der eine zylindrische Symmetrie in Bezug auf eine erste Achse (37) aufweist und auf seinem Boden eine erste Öffnung (47) umfasst, die auf einer zweiten Achse (48) parallel zu der ersten Achse (37) für den Durchgang eines Behälters (2) zentriert ist, sowie einen Trägerabschnitt (38) für Behälter; eine Ablage (52), die parallel zu dem Trägerabschnitt (38) zwischen einer ersten Position, in der die Ablage (52) die erste Öffnung (47) versperrt, sodass der Durchgang des Behälters (2) nicht ermöglicht wird, und einer zweiten Position, in der die erste Öffnung (47) frei ist, bewegbar ist, und einen Deckel (39), der den becherförmigen Körper (36) verschließt und eine zweite Öffnung (49) für den Durchgang des Behälters (2) umfasst, wobei das Lager **dadurch gekennzeichnet ist, dass** die zweite Öffnung (49) koaxial zu der ersten Öffnung (47) ist und dadurch, dass es ferner eine Trommel (40) umfasst, die koaxial in dem becherförmigen Körper (36) untergebracht ist, es eine Vielzahl von Sitzen (41) umfasst, die um die erste Achse (37) gemäß einem bestimmten Winkelabstand verteilt sind, um jeweilige Behälter zu halten, die auf dem Trägerabschnitt (38) stehen, und angepasst ist, um sich um die erste Achse (37) zu drehen, um jeden Sitz (41) zwischen einer Transferposition, in der der Sitz (41) mit der zweiten Öffnung (49) ausgerichtet ist, um den Behälter (2) aufzunehmen, wenn sich die Ablage (52) in der ersten Position befindet, oder um einen direkten Durchgang des Behälters (2) zwischen der ersten Öffnung (47) und der zweiten Öffnung (49) zu ermöglichen, wenn sich die Ablage (52) in der zweiten Position befindet, und einer Vielzahl von Lagerpositionen, in denen der Sitz (41) jeweils nicht der zweiten Öffnung (49) zugewandt ist, zu positionieren.

2. Lager nach Anspruch 1, umfassend eine abschirmenden Beschichtung (42), die außenseitig mindestens eine Seitenwand (43) des becherförmigen Körpers (36) und des Deckels (39) umhüllt und aus einem ersten Material, vorzugsweise einer Bleilegierung, besteht und zur Abschirmung von Strahlung geeignet ist, wobei die Trommel (40) einen abschirmenden Sektor (50) umfasst, der ein Element (51) umfasst, aufweisend eine Ausdehnung entlang einer Ebene quer zu der ersten Achse (37), die ausreicht, um die zweite Öffnung (49) zu verschließen, und der aus einem zweiten Material, vorzugsweise Wolfram, besteht, das zur Abschirmung der Strahlung geeignet ist.

3. Lager nach Anspruch 1 oder 2, umfassend mindestens eine abschirmende Beschichtung (42), die außenseitig mindestens eine Seitenwand (43) des becherförmigen Körpers (36) und des Deckels (39 umhüllt und aus einem ersten Material, vorzugsweise einer Bleilegierung, besteht, das zur Abschirmung von Strahlung geeignet ist, und eine erste Betätigungsvorrichtung (44), die außerhalb der abschirmenden Beschichtung (42) angeordnet und kinematisch mit der Trommel (40) über eine Antriebswelle (46) gekuppelt ist, die auf der ersten Achse (37) zentriert ist und durch den Deckel (39) und die abschirmende Beschichtung (42) führt, um zu bewirken, dass die Trommel (40) sich dreht.

4. Lager nach einem der Ansprüche 1 bis 3, wobei der Trägerabschnitt (38) eine Platte ist, aufweisend eine Ringform, wobei die Platte einen Ausschnitt aufweist, der wie die erste Öffnung (47) ausgeformt ist.

5. Lager nach einem der Ansprüche 1 bis 4, wobei der Trägerabschnitt (38) eine Platte ist und die Ablage (52) entlang eines Schlitzes (58) des Trägerabschnitts (38) bewegbar ist und eine obere Fläche aufweist, die im Wesentlichen koplanar zu einer oberen Fläche des Trägerabschnitts (38) ist.

6. Lager nach einem der Ansprüche 1 bis 5, wobei die Ablage (52) mit einem Arm (53) versehen ist, aufweisend ein Ende (54), das geeignet ist, um sich derart um die erste Achse (37) zu drehen, dass sich die Ablage (52) entlang einer Bahn in der Form eines kreisförmigen Segments bewegt, wobei das Lager (23) eine zweite Betätigungsvorrichtung (45) umfasst, um das Ende (54) um die erste Achse (37) zu drehen.

7. Lager nach einem der Ansprüche 1 bis 6, wobei jeder Sitz (41) einen Teilabschnitt entlang einer Ebene quer zu der ersten Achse (37) in der Form eines C aufweist, außenseitig der Trommel (40) offen, sodass der von dem Sitz (41) gehaltene Behälter (2) bei Gebrauch einen Seitenabschnitt aufweist, der der inneren Oberfläche einer Seitenwand (43) des becherförmigen Körpers (36) zugewandt ist, wobei das Lager (23) einen ersten Näherungssensor (63) umfasst, der auf der Seitenwand (43) montiert ist, um die Anwesenheit oder Abwesenheit des Behälters (2) in einem jeweiligen Sitz (41) zu erkennen, wenn dieser vor der Montageposition des Näherungssensors (63) vorbeiläuft.

8. Lager nach einem der Ansprüche 1 bis 6, wobei der becherförmige Körper (36) einen darin vorstehenden Stift (65) umfasst und die Trommel (40) ein Arretierelement (66) umfasst, das geeignet ist, um mit dem Stift (65) in Eingriff zu gelangen, sodass eine winkelige Referenzposition für die Trommel (40) definiert wird, wobei die Trommel (40) einen Oberflächenabschnitt (67) umfasst, der dem Deckel (39) zugewandt ist und ein Unterbrechungselement (68) aufweist, und das Lager (23) einen zweiten Näherungssensor (69) umfasst, der in dem Deckel (39) in einer Position montiert ist, um das Unterbrechungselement (68) zu erkennen, wenn sich die Trommel (40) in der Referenzposition befindet.

9. Einheit zum Handhaben eines Behälters (2) für ein festes Zielmaterial und zum Auflösen des in dem Behälter (2) enthaltenen festen Zielmaterials, wobei die Einheit (5) einen abgeschirmten Isolator (16) und in diesem eine Arbeitsplatte (17) umfasst, aufweisend einen Transferport (18) für den Behälter (2), eine Auflösungsstation (19), die mindestens einen Träger (20) für den Behälter (2) umfasst, der auf der Arbeitsplatte (17) angeordnet ist, und einen Auflösungskopf (21), der geeignet ist, um eine Auflösungslösung in den Behälter (2) einzuspeisen, um das feste Zielmaterial aufzulösen, wenn der Behälter (2) auf dem Träger (20) platziert ist, eine Handhabungsvorrichtung (22) zum Bewegen des Behälters (2) von der Auflösungsstation (19) zum Transferport (18) und ein Lager (23) für Behälter nach einem der Ansprüche 1 bis 8, wobei das Lager (23) unterhalb der Arbeitsplatte (17) angeordnet ist und ferner eine erste Transferleitung (31) umfasst, um die zweite Öffnung (49) mit dem Transferport (18) in Kommunikation zu setzen.

10. System zur Herstellung eines Radioisotops, umfassend mindestens einen Behälter (2) für ein festes Zielmaterial, eine Bestrahlungsstation (3), umfassend einen Zyklotron (4) zum Aussenden eines Protonenstrahls gegen das feste Zielmaterial in dem Behälter (2), eine Einheit (5) zum Handhaben des Behälters (2) und Auflösen des in dem Behälter (2) enthaltenen festen Zielmaterials sowie ein pneumatisches Transfersystem (6) zum bidirektionalen Transferieren des Behälters (2) zwischen der Bestrahlungsstation (3) und der Einheit (5), wobei die Einheit (5) nach Anspruch 9 ausgeführt ist und das pneumatische Transfersystem (6) mindestens eine zweite Transferleitung (32, 33) zum Verbinden der ersten Öffnung (47) des Lagers (23) mit der Bestrahlungsstation (3) umfasst.

## Revendications

1. Stockage pour récipients de matériau cible solide destinés à un système de production de radioisotopes, le stockage (23) comprenant : un corps en forme de coupe (36), qui a une symétrie cylindrique par rapport à un premier axe (37) et comprend, sur son fond, une première ouverture (47) centrée sur un second axe (48) parallèle au premier axe (37) pour le passage d'un récipient (2) et une partie de support (38) pour les récipients ; une tablette (52), mobile parallèlement à la partie de support (38), entre une première position, dans laquelle la tablette (52) obstrue la première ouverture (47) pour ne pas permettre le passage du récipient (2), et une seconde position, dans laquelle la première ouverture (47) est libre ; et un couvercle (39), qui ferme le corps en forme de coupelle (36) et comprend une seconde ouverture (49) pour le passage du récipient (2) ; le stockage étant **caractérisé en ce que** la seconde ouverture (49) est coaxiale à la première ouverture (47) et **en ce qu'**il comprend en outre un tambour (40), qui est logé coaxialement dans le corps en forme de coupelle (36), comprend une pluralité de sièges (41) répartis autour du premier axe (37) selon un certain pas angulaire pour maintenir les récipients respectifs debout sur la partie de support (38) et est adapté pour tourner autour du premier axe (37) afin de positionner chaque siège (41) entre une position de transfert, dans laquelle le siège (41) est aligné avec la seconde ouverture (49) pour recevoir le récipient (2) lorsque la tablette (52) est dans la première position ou pour permettre le passage direct du récipient (2) entre la première ouverture (47) et la seconde ouverture (49) lorsque la tablette (52) est dans la seconde position, et une pluralité de positions de stockage, dans chacune desquelles le siège (41) n'est pas en face de la seconde ouverture (49).

2. Stockage selon la revendication 1, et comprenant un revêtement de blindage (42), qui enveloppe extérieurement au moins une paroi latérale (43) du corps en forme de coupelle (36) et du couvercle (39) et qui est constitué d'un premier matériau, de préférence un alliage de plomb, adapté à la protection contre les rayonnements ; le tambour (40) comprenant un secteur de blindage (50), qui comprend un élément (51) ayant une extension, le long d'un plan transversal au premier axe (37), suffisante pour obturer la seconde ouverture (49) et qui est constitué d'un second matériau, de préférence du tungstène, pouvant protéger contre ledit rayonnement.

3. Stockage selon la revendication 1 ou 2, et comprenant un revêtement de blindage (42), qui enveloppe extérieurement au moins une paroi latérale (43) du corps en forme de coupelle (36) et du couvercle (39) et qui est constitué d'un premier matériau, de préférence un alliage de plomb, adapté à la protection contre les rayonnements, et un premier dispositif actionneur (44), disposé à l'extérieur du revêtement de blindage (42) et couplé cinématiquement au tambour (40) par l'intermédiaire d'un arbre d'entraînement (46) centré sur le premier axe (37) et traversant le couvercle (39) et le revêtement de blindage (42) pour faire tourner le tambour (40).

4. Stockage selon l'une quelconque des revendications 1 à 3, dans lequel ladite partie de support (38) est une plaque ayant une forme annulaire, ladite plaque ayant une découpe ayant la forme de la première ouverture (47).

5. Stockage selon l'une quelconque des revendications 1 à 4, dans lequel ladite partie de support (38) est une plaque et ladite tablette (52) est mobile le long d'une fente (58) de ladite partie de support (38) et a une face supérieure sensiblement coplanaire à une face supérieure de ladite partie de support (38).

6. Stockage selon l'une quelconque des revendications 1 à 5, dans lequel ladite tablette (52) est pourvue d'un bras (53) ayant une extrémité (54) pouvant tourner autour dudit premier axe (37) de sorte que ladite tablette (52) se déplace le long d'une trajectoire en forme de segment circulaire ; le stockage (23) comprenant un second dispositif actionneur (45) pour faire tourner ladite extrémité (54) autour dudit premier axe (37).

7. Stockage selon l'une quelconque des revendications 1 à 6, dans lequel chaque siège (41) présente une section, selon un plan transversal au premier axe (37), en forme de C ouvert vers l'extérieur du tambour (40) de sorte que, en cours d'utilisation, le récipient (2) maintenu par le siège (41) présente une partie latérale faisant face à la surface intérieure d'une paroi latérale (43) du corps en forme de coupelle (36) ; le stockage (23) comprenant un premier capteur de proximité (63), qui est monté sur ladite paroi latérale (43) pour détecter la présence ou l'absence du récipient (2) dans un siège (41) respectif lorsque ce dernier passe devant la position de montage du capteur de proximité (63).

8. Stockage selon l'une quelconque des revendications 1 à 6, dans lequel ledit corps en forme de coupelle (36) comprend une broche (65) faisant saillie à l'intérieur, et ledit tambour (40) comprend un élément de butée (66) pouvant s'engager avec ladite broche (65) de manière à définir une position de référence angulaire pour ledit tambour (40) ; le tambour (40) comprenant une partie de surface (67) faisant face au couvercle (39) et comportant un élément de discontinuité (68), et le stockage (23) comprenant un second capteur de proximité (69) monté dans le couvercle (39) dans une position permettant de détecter l'élément de discontinuité (68) lorsque le tambour (40) se trouve dans la position de référence.

9. Unité pour manipuler un récipient (2) pour un matériau cible solide et pour dissoudre le matériau cible solide présent dans le récipient (2), l'unité (5) comprenant un isolateur blindé (16) et, à l'intérieur de ce dernier, un plan de travail (17) présentant un orifice de transfert (18) pour le récipient (2), un poste de dissolution (19), qui comprend au moins un support (20) pour le récipient (2) disposé sur le plan de travail (17) et une tête de dissolution (21) pouvant introduire une solution de dissolution dans le récipient (2) pour dissoudre le matériau cible solide lorsque le récipient (2) est placé sur le support (20), un dispositif de manutention (22) pour déplacer le récipient (2) du poste de dissolution (19) à l'orifice de transfert (18), et un stockage (23) pour les récipients selon l'une quelconque des revendications 1 à 8 ; le stockage (23) étant disposé sous le plan de travail (17) et comprenant en outre un premier conduit de transfert (31) pour mettre en communication ladite seconde ouverture (49) avec l'orifice de transfert (18).

10. Système de production d'un radio-isotope comprenant au moins un récipient (2) pour un matériau cible solide, un poste d'irradiation (3) comprenant un cyclotron (4) pour émettre un faisceau de protons contre le matériau cible solide dans le récipient (2), une unité (5) pour manipuler le récipient (2) et dissoudre le matériau cible solide présent dans le récipient (2), et un système de transfert pneumatique (6) pour transférer de manière bidirectionnelle le récipient (2) entre le poste d'irradiation (3) et ladite unité (5) ; ladite unité (5) étant selon la revendication 9 et le système de transfert pneumatique (6) comprenant au moins un second conduit de transfert (32, 33) pour connecter ladite première ouverture (47) dudit stockage (23) avec le poste d'irradiation (3).
